# EUROPEAN PATENT APPLICATION

(11) **EP 2 796 261 A1**
(43) Date of publication of application: **29.10.2014**
(21) Application number: 12860876.7
(22) Date of filing: 13.12.2012
(51) Int. Cl.: B28B 11/12

(54) **CUTTING METHOD AND CUTTING DEVICE FOR HONEYCOMB MOLDED BODY, AND PRODUCTION METHOD FOR HONEYCOMB STRUCTURE**

(30) Priority: 20.12.2011 JP 2011278544; 24.07.2012 JP 2012163915
(71) Applicant: Sumitomo Chemical Co., Ltd, Chuo-ku, Tokyo 104-8260 (JP)
(72) Inventor: MORI Masaharu, Niihama-shi Ehime 792-8521 (JP); GONG Ying, Niihama-shi Ehime 792-8521 (JP)
(74) Representative: Vossius & Partner
(86) International application number: PCT/JP2012/082349
(87) International publication number: WO 2013/094514

(57) **Abstract**

A cutting device for a honeycomb molded body is a device for cutting a honeycomb molded body having a plurality of cells extending along a predetermined axis, at a first face and a second face intersecting with the axis. The cutting device includes: a conveyer for moving the honeycomb molded body in a moving direction intersecting with the axis; a first cutting unit for cutting the honeycomb molded body at the first face by a band saw having a linear blade portion extending so as to intersect with the axis when viewed from the moving direction; and a second cutting unit for cutting the honeycomb molded body at the second face by a band saw having a linear blade portion extending so as to intersect with the axis when viewed from the moving direction.

## Description

### Technical Field

The present invention relates to a cutting method and a cutting device for a honeycomb molded body having a plurality of cells, and a production method for a honeycomb structure.

### Background Art

The honeycomb structure is widely known for use as a filter for cleaning up gas emitted from an internal combustion engine, e.g., as a diesel particulate filter. The honeycomb structure has a structure in which each of cells is arranged so that a cell plugged at one end by a plugging material is adjacent to at least one cell plugged at the other end by the plugging material.

Such a honeycomb structure is produced using a honeycomb molded body having a plurality of cells extending along a predetermined axis. The honeycomb molded body is cut in a length necessary for the honeycomb structure. Disclosed as a cutting method for the honeycomb molded body is a method for moving a thin wire to a ceramic honeycomb molded body and pressing the thin wire against the ceramic honeycomb molded body (e.g., cf. Patent Literature 1).

### Citation List

### Patent Literature

Patent Literature 1: Japanese Patent No. 4049973

### Summary of Invention

### Technical Problem

However, the conventional cutting method needs to move the thin wire every time the honeycomb molded body is cut at one face and thus the conventional cutting method has failed to achieve efficient cutting of the honeycomb molded body in certain cases. Furthermore, a movement locus of the thin wire varies every cut face and thus the conventional cutting method has failed to achieve accurate cutting of the honeycomb molded body in some cases. It is therefore an object of the present invention to provide a cutting method and a cutting device for a honeycomb molded body, and a production method for a honeycomb structure capable of achieving efficient and accurate cutting of the honeycomb molded body.

### Solution to Problem

A cutting method for a honeycomb molded body according to the present invention is a method for cutting the honeycomb molded body having a plurality of cells extending along a predetermined axis, at a first face and a second face intersecting with the axis, the cutting method comprising: while moving the honeycomb molded body in a moving direction intersecting with the axis, cutting the honeycomb molded body at the first face by a first cutting member having a linear first blade portion extending so as to intersect with the axis when viewed from the moving direction, and cutting the honeycomb molded body at the second face by a second cutting member having a linear second blade portion extending so as to intersect with the axis when viewed from the moving direction.

In this cutting method, the honeycomb molded body is cut at the first face by the first cutting member and the honeycomb molded body is cut at the second face by the second cutting member, in a process in which the honeycomb molded body moves in the moving direction intersecting with the axis. This can achieve efficient cutting of the honeycomb molded body. Furthermore, since the honeycomb molded body moves relative to the first blade portion and the second blade portion, a relative movement locus of the first blade portion and a relative movement locus of the second blade portion with respect to the honeycomb molded body approximately agree with each other. Since this makes a distance between the first face and the second face after cut or the like stable, it is feasible to achieve accurate cutting of the honeycomb molded body.

Furthermore, the moving direction may be a direction substantially perpendicular to the axis and the first blade portion and the second blade portion may extend in a direction substantially perpendicular to the axis and the moving direction. This cutting method can enhance the perpendicularity of the first face and the second face to the axis.

Furthermore, the first cutting member and the second cutting member may be band saws. In this cutting method, the first blade portion and the second blade portion are driven along their respective extending directions. Since this causes a force for cutting the honeycomb molded body to also act thereon in the respective extending directions of the first blade portion and the second blade portion, it is feasible to achieve more efficient cutting of the honeycomb molded body.

Furthermore, the first blade portion and the second blade portion may be substantially parallel to each other, and the first blade portion and the second blade portion may be driven in the same direction in their respective extending directions. In this cutting method, a cutting load on the honeycomb molded body from the first blade portion and a cutting load on the honeycomb molded body from the second blade portion act at different positions and in the same direction when viewed from the moving direction. For this reason, the honeycomb molded body becomes less likely to incline when viewed from the moving direction, whereby it is feasible to achieve more accurate cutting of the honeycomb molded body.

Furthermore, the honeycomb molded body may be supported so as to oppose to the direction in which the first blade portion and the second blade portion are driven. In this cutting method, the honeycomb molded body is pressed toward the side where the honeycomb molded body is supported, by the cutting load on the honeycomb molded body from the first blade portion and the cutting load on the honeycomb molded body from the second blade portion, whereby the position and posture of the honeycomb molded body become stable when viewed from the moving direction. For this reason, it is feasible to achieve more accurate cutting of the honeycomb molded body.

Furthermore, the first blade portion and the second blade portion may be substantially simultaneously brought into contact with the honeycomb molded body moving in the moving direction. In this cutting method, since the cutting by the first blade portion and the cutting by the second blade portion simultaneously proceed, it is feasible to achieve more efficient cutting of the honeycomb molded body.

Furthermore, the first blade portion may be brought into contact with the honeycomb molded body moving in the moving direction and thereafter the second blade portion may be brought into contact with the honeycomb molded body. This cutting method can prevent the load on the honeycomb molded body from suddenly increasing.

Furthermore, after the first blade portion comes into contact with the honeycomb molded body and before cutting of the honeycomb molded body at the first face and the second face is completed, the honeycomb molded body may be moved only in the moving direction. In this cutting method, since the honeycomb molded body is cut at both of the first face and the second face by only moving the honeycomb molded body in one direction, it is feasible to achieve more efficient cutting of the honeycomb molded body. In addition, since the honeycomb molded body does not move in the opposite direction to the foregoing one direction during the cutting of the honeycomb molded body at the first face and the second face, the first blade portion or the second blade portion does not pass an already-cut portion again. For this reason, it is feasible to prevent the first face and the second face after cut from being excessively cut, to improve smoothness and flatness of the cut faces, and to achieve more accurate cutting of the honeycomb molded body.

Furthermore, a plurality of honeycomb molded bodies may be arranged so as to line up along an arrangement direction intersecting with the axis and the plurality of honeycomb molded bodies may be simultaneously moved in the moving direction. This cutting method allows the step of arranging the honeycomb molded body and the step of cutting the honeycomb molded body to be performed at once for the plurality of honeycomb molded bodies, whereby it is feasible to achieve more efficient cutting of the honeycomb molded body.

A production method for a honeycomb structure according to the present invention comprises: producing the honeycomb structure, using a portion between the first face and the second face of the honeycomb molded body cut with the use of the above-described cutting method for a honeycomb molded body, as a base material. Since this production method uses the aforementioned cutting method for a honeycomb molded body, it is feasible to achieve efficient and accurate production of the honeycomb structure.

Furthermore, the honeycomb structure may be produced by subjecting the base material to a predetermined treatment, using at least one of a portion outside the first face and a portion outside the second face of the cut honeycomb molded body, as a pedestal. In this production method, an excess part of the honeycomb molded body not used as the base material can be effectively utilized for production of the honeycomb structure.

A cutting device for a honeycomb molded body according to the present invention is a device for cutting the honeycomb molded body having a plurality of cells extending along a predetermined axis, at a first face and a second face intersecting with the axis, the cutting device comprising: a conveyer for moving the honeycomb molded body in a moving direction intersecting with the axis; a first cutting unit for cutting the honeycomb molded body at the first face by a first cutting member having a linear first blade portion extending so as to intersect with the axis when viewed from the moving direction; and a second cutting unit for cutting the honeycomb molded body at the second face by a second cutting member having a linear second blade portion extending so as to intersect with the axis when viewed from the moving direction.

In this cutting device, the honeycomb molded body is cut at the first face by the first cutting member of the first cutting unit and the honeycomb molded body is cut at the second face by the second cutting member of the second cutting unit, in a process in which the honeycomb molded body is moved in the moving direction intersecting with the axis by the conveyer. By this, it is feasible to achieve efficient and accurate cutting of the honeycomb molded body.

Furthermore, the moving direction may be a direction substantially perpendicular to the axis and the first blade portion and the second blade portion may extend in a direction substantially perpendicular to the axis and the moving direction. This cutting device can enhance the perpendicularity of the first face and the second face to the axis.

Furthermore, the first cutting member and the second cutting member may be band saws. In this cutting device, the first blade portion and the second blade portion are driven along their respective extending directions. Since this causes a force for cutting the honeycomb molded body to also act in the respective extending directions of the first blade portion and the second blade portion, it is feasible to achieve more efficient cutting of the honeycomb molded body.

The first blade portion and the second blade portion may be substantially parallel to each other, and the first cutting unit and the second cutting unit may drive the first blade portion and the second blade portion in the same direction in their respective extending directions. In this cutting device, a cutting load on the honeycomb molded body from the first blade portion and a cutting load on the honeycomb molded body from the second blade portion act at different positions and in the same direction when viewed from the moving direction. For this reason, the honeycomb molded body becomes less likely to incline when viewed from the moving direction, and thus it is feasible to achieve more accurate cutting of the honeycomb molded body.

Furthermore, the conveyer may support the honeycomb molded body so as to oppose to the direction in which the first blade portion and the second blade portion are driven. In this cutting device, the honeycomb molded body is pressed toward the side where the honeycomb molded body is supported, by the cutting load on the honeycomb molded body from the first blade portion and the cutting load on the honeycomb molded body from the second blade portion, whereby the position and posture of the honeycomb molded body become stable when viewed from the moving direction. For this reason, it is feasible to achieve more accurate cutting of the honeycomb molded body.

The cutting device may further comprise: a space adjusting mechanism for adjusting a space between the first cutting unit and the second cutting unit in a direction perpendicular to the moving direction. In this cutting device, the space between the first face and the second face can be changed depending upon the length of the honeycomb structure to be produced.

Furthermore, the first cutting unit and the second cutting unit may be arranged at substantially identical positions in the moving direction. In this cutting device, the first blade portion and the second blade portion can be substantially simultaneously brought into contact with the honeycomb molded body moving in the moving direction. Since this makes the cutting by the first blade portion and the cutting by the second blade portion simultaneously proceed, it is feasible to achieve more efficient cutting of the honeycomb molded body.

Furthermore, the first cutting unit and the second cutting unit may be arranged at different positions in the moving direction. This cutting device allows the first blade portion to be brought into contact with the honeycomb molded body moving in the moving direction and thereafter the second blade portion to be brought into contact with the honeycomb molded body. It can prevent the load on the honeycomb molded body from suddenly increasing. Furthermore, the first cutting unit and the second cutting unit become less likely to interfere in the direction perpendicular to the moving direction. For this reason, it becomes easier to locate the first blade portion and the second blade portion closer to each other in the direction perpendicular to the moving direction, and a setting available range becomes wider for the space between the first face and the second face.

Furthermore, the conveyer may have: a moving stage which moves in the moving direction while supporting the honeycomb molded body; and a retainer for fixing the honeycomb molded body to the moving stage between the first face and the second face. Since this cutting device keeps the position and posture of a portion of the honeycomb molded body between the first face and the second face stable, it is feasible to achieve more accurate cutting of the honeycomb molded body.

Furthermore, the conveyer may have a plurality of moving stages arranged so as to line up along an arrangement direction intersecting with the axis, and support the honeycomb molded body on each of the moving stages. This cutting device allows a step of setting the honeycomb molded body on the conveyer and a step of cutting the honeycomb molded body to be performed at once for the plurality of honeycomb molded bodies, whereby it is feasible to achieve more efficient cutting of the honeycomb molded body.

Furthermore, the conveyer may have two moving stages, and the retainer may have: a columnar body projecting in a direction substantially perpendicular to the axis and the arrangement direction between the two moving stages; and an arm member attached to the columnar body, extending on both sides in the arrangement direction from the columnar body, and being in contact with two honeycomb molded bodies supported respectively by the two moving stages. Since this cutting device can fix two honeycomb molded bodies by one arm member attached to one columnar body, it becomes feasible to further enhance efficiency of an operation of fixing the honeycomb molded bodies to the respective moving stages. In addition, since the arm member is in contact with the honeycomb molded body on both sides of the columnar body, the posture of the arm member is stable even with one columnar body and the honeycomb molded body can be securely fixed to each moving stage.

Furthermore, the conveyer may further have an auxiliary moving stage which moves together with the moving stage while supporting the honeycomb molded body outside the first face and outside the second face. This cutting device can prevent the portions of the cut honeycomb molded body outside the first face and the second face, from falling off and allow these portions to be effectively utilized for production of the honeycomb structure.

### Advantageous Effect of Invention

According to the present invention, it is feasible to provide the cutting method and the cutting device for the honeycomb molded body, and the production method for the honeycomb structure capable of achieving efficient and accurate cutting of the honeycomb molded body.

### Brief Description of Drawings

Fig. 1 is a perspective view of a honeycomb structure.
Fig. 2 is a cross-sectional view along the line II-II in Fig. 1.
Fig. 3 is a front view of a first embodiment of the cutting device according to the present invention.
Fig. 4 is a plan view of the cutting device in Fig. 3.
Fig. 5 is a side view of moving stages in Fig. 3.
Fig. 6 is a side view of band saws in Fig. 3.
Fig. 7 is a plan view showing a modification example of retainers.
Fig. 8 is a side view of the retainers in Fig. 7.
Fig. 9 is a side view showing a state in which a knurled nut in Fig. 8 is fastened.
Fig. 10 is a plan view showing a state in which arm members in Fig. 7 are rotated.
Fig. 11 is a front view of a second embodiment of the cutting device according to the present invention.
Fig. 12 is a plan view of a conveyer in Fig. 11.
Fig. 13 is a side view of the conveyer in Fig. 11.
Fig. 14 is a side view showing a case where the moving stages are arranged as detachable.
Fig. 15 is a plan view showing a case where cutting units are shifted back and forth.

### Description of Embodiments

Preferred embodiments of the present invention will be described below in detail with reference to the drawings. In the drawings, identical or equivalent portions will be denoted by the same reference signs, without redundant description.

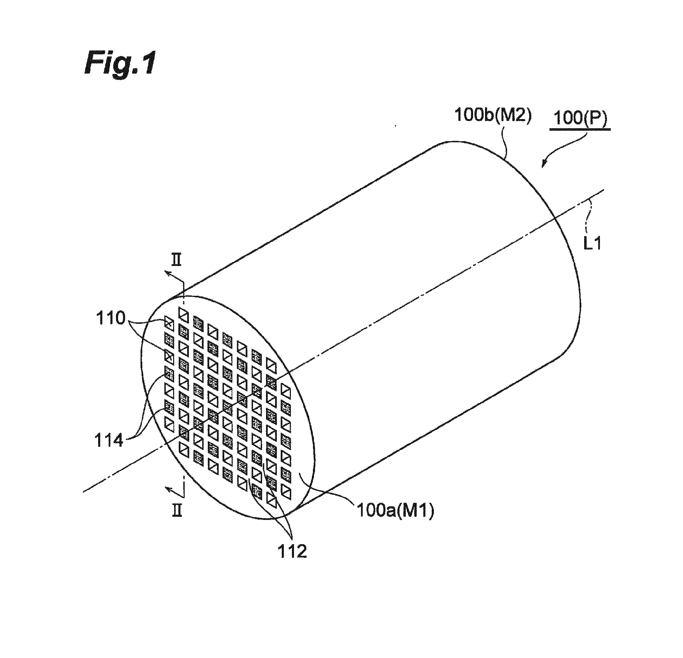

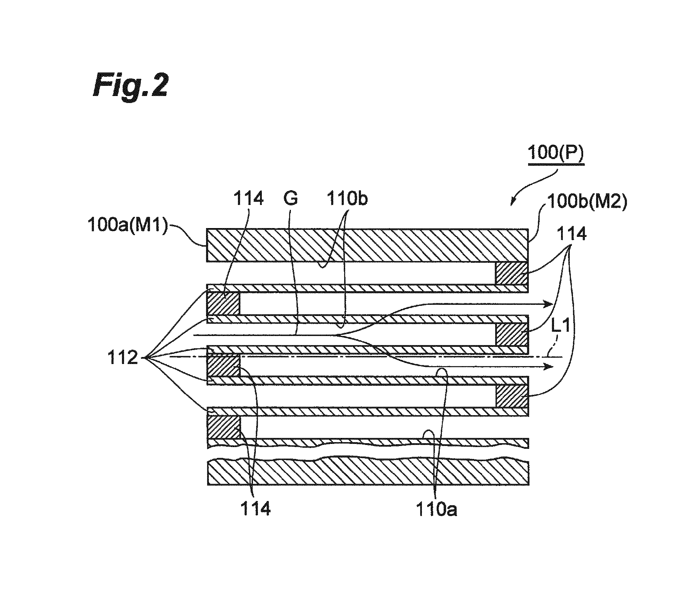

First, a honeycomb structure will be described. Fig. 1 is a perspective view of the honeycomb structure. Fig. 2 is a cross-sectional view along the line II-II in Fig. 1. The honeycomb structure 100 shown in Figs. 1 and 2 is a cylindrical member comprised of a porous ceramic material (e.g., with an average pore diameter of not more than 20 µm) or the like, and has a plurality of cells 110. Each of the cells 110 is a hole formed along the axial direction of the honeycomb structure 100 from an end face 100a to an end face 100b of the honeycomb structure 100. A porous partition wall 112 is formed between the cells 110. As shown in Fig. 2, predetermined cells 110a out of the plurality of cells 110 are plugged by a plugging material 114 on the end face 100a side. On the end face 100b side, the cells 110b other than the cells 110a out of the plurality of cells 110 are plugged by the plugging material 114.

The honeycomb structure 100 is used as a filter for cleaning up gas G emitted from an internal combustion engine. Specifically, the gas G is made to flow from the end face 100a to the end face 100b. The gas G is introduced into the cells 110b at the end face 100a, flows through the partition wall 112 into the cells 110a, and is then discharged from the cells 110a at the end face 100b. During this process, particulate substances (soot and others) contained in the gas G are captured by the partition wall 112, and thus the gas G is cleaned up.

The honeycomb structure 100 is produced by firing a honeycomb molded body P. The honeycomb molded body P is a molded body of a cylindrical shape comprised of a ceramic raw material. In the honeycomb molded body P a plurality of cells 110 are formed along an axis L1 thereof. The honeycomb molded body P is cut at faces M1, M2 intersecting with the axis L1 and thereafter fired, whereby the face M1 turns into the end face 100a of the honeycomb structure 100 and the face M2 into the end face 100b of the honeycomb structure 100.

The following will describe the cutting devices for the honeycomb molded body P. In the description of the cutting devices, "front, back, left, and right" shall refer to directions determined when a moving direction of the ceramic molded body P during cutting is defined as a forward direction.

### [First Embodiment]

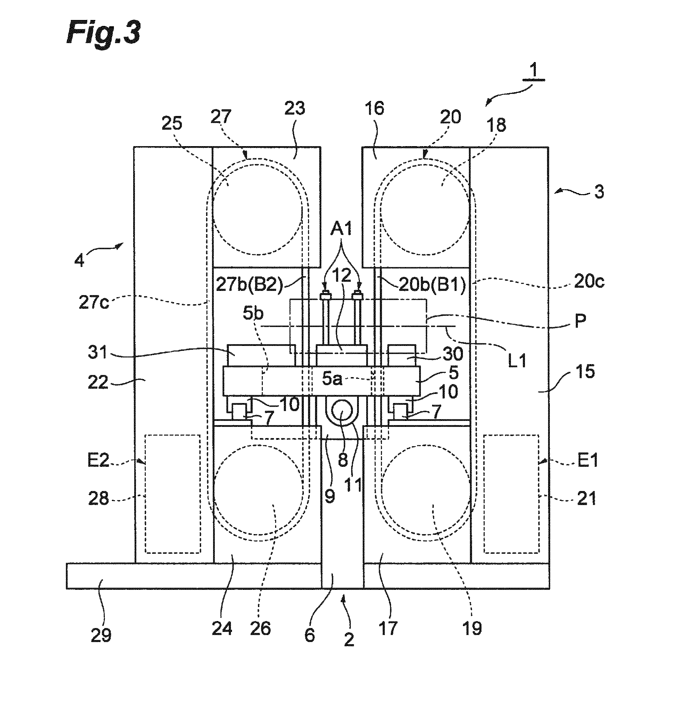

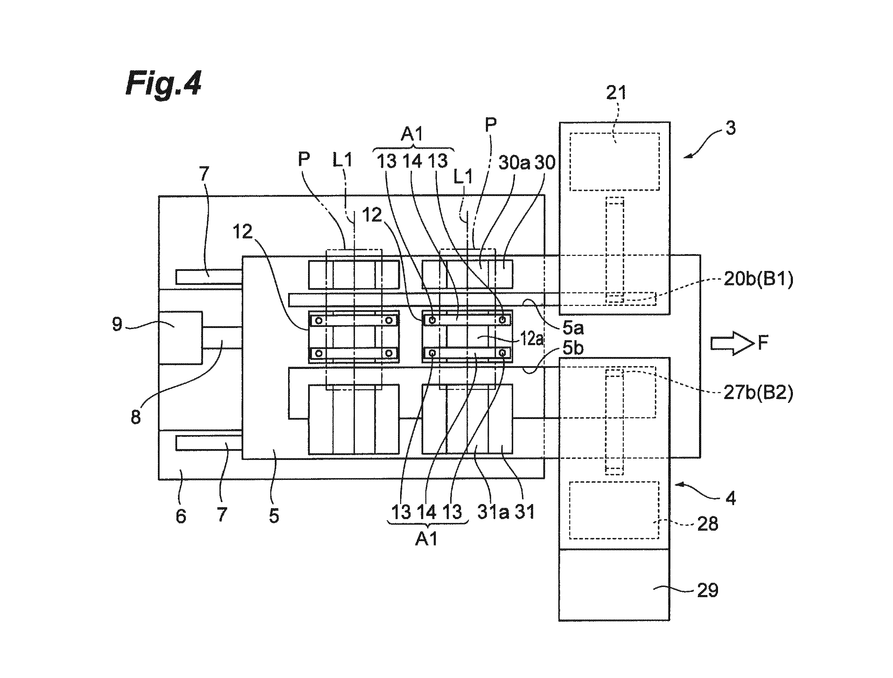

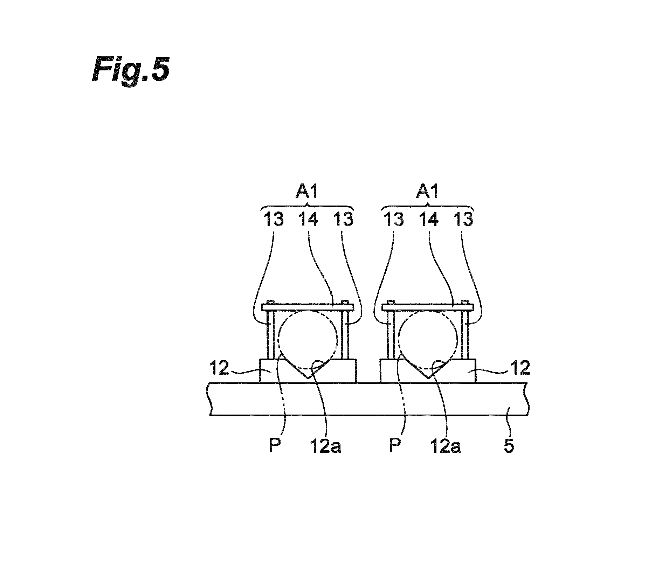

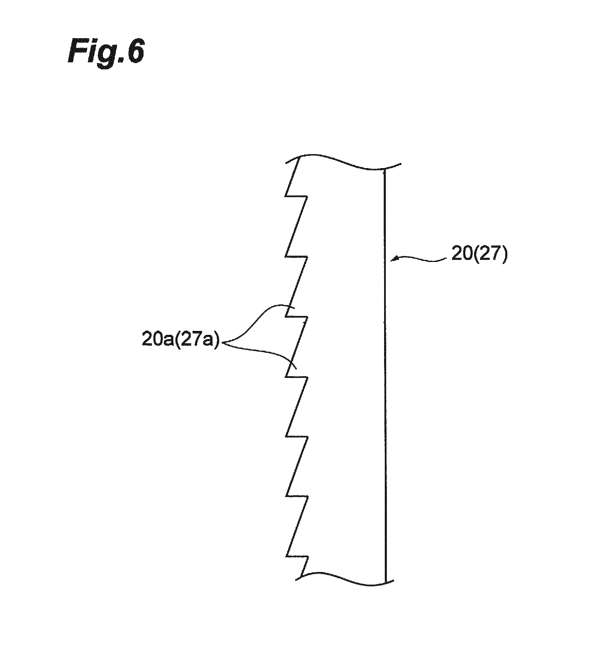

Fig. 3 is a front view of the first embodiment of the cutting device according to the present invention. Fig. 4 is a plan view of the cutting device in Fig. 3, Fig. 5 a side view of moving stages in Fig. 3, and Fig. 6 a side view of band saws in Fig. 3. As shown in Fig. 3, the cutting device 1 is provided with a conveyer 2 and cutting units 3, 4.

The conveyer 2 has a table 5, and a table driving device 6 supporting the table 5 from bottom and configured to move it along the front-back direction. A pair of rails 7, 7 extending along the front-back direction are provided on a top part of the table driving device 6. A slide portion 10 is set on each rail 7. The slide portion 10 is arranged as slidable along the rail 7. A ball screw 8 extending along the front-back direction is provided between the rails 7, 7. A power source 9 such as a motor for rotating the ball screw 8 is provided on the back side on the top part of the table driving device 6 and the back end of the ball screw 8 is connected to the power source 9.

The table 5 is attached onto the slide portions 10, 10 and is movable along the front-back direction together with the slide portions 10, 10. A moving nut 11 in mesh with the ball screw 8 is provided on the bottom of the table 5. The moving nut 11 moves back and forth with rotation of the ball screw 8. Because of this configuration, it is possible to move the table 5 along the front-back direction together with the moving nut 11 by rotating the ball screw 8.

As shown in Fig. 4, the table 5 has a rectangular planar shape longer in the front-back direction and the front part of the table 5 projects forward from the table driving device 6. Openings 5a, 5b are formed at two locations in the table 5 so as to open up and down along the front-back direction. Blade portions B1, B2 described below are guided through the openings 5a, 5b.

Two moving stages 12, 12 arranged to move forward and backward together with the table 5 are provided on the region between the openings 5a, 5b in the top part of the table 5. Namely, the conveyer 2 has the moving stages 12, 12 moving along the front-back direction. The two moving stages 12, 12 are arranged to line up along the front-back direction. A V-shaped groove 12a is formed along the left-right direction in a top part of each moving stage 12. A honeycomb molded body P is set with its axis L1 extending along the left-right direction, on each moving stage 12. Namely, the table 5 supports a honeycomb molded body P per moving stage 12. The lower part of the honeycomb molded body P is set down in the groove 12a and the outer peripheral surface of the honeycomb molded body P comes into contact with the inner surface of the groove 12a. By this, the honeycomb molded body P is positioned relative to the moving stage 12 (cf. Fig. 5).

The moving stage 12 is provided with two retainers A1 lining up along the left-right direction and configured to fix the honeycomb molded body P to the moving stage. Namely, the conveyer 2 has the retainers A1 for fixing the honeycomb molded body P to the moving stage 12. Each retainer A1 has a pair of pillars 13, 13 projecting upward from the moving stage 12 in front of and behind the groove 12a, and a retaining plate 14 stretched between the pair of pillars 13, 13. As shown in Fig. 5, the retaining plate 14 pushes the honeycomb molded body P set on the moving stage 12, from top. By this, the honeycomb molded body P is fixed to the moving stage 12.

As shown in Fig. 4, auxiliary moving stages 30, 31 are provided on portions on the left and the right of each moving stage 12, in the top part of the table 5. Namely, the conveyer 2 has the auxiliary moving stages 30, 31. A gap for avoiding contact with the below-described blade portion B1, B2 is formed between the auxiliary moving stage 30, 31 and the moving stage 12. In respective top parts of the auxiliary moving stages 30, 31, V-shaped grooves 30a, 31a are formed along the left-right direction so as to correspond to the groove 12a. The two end portions of the honeycomb molded body P set on the moving stage 12 are set on the auxiliary moving stages 30, 31. The lower parts of the two end portions of the honeycomb molded body P are set down in the grooves 30a, 31a.

The cutting units 3, 4 are arranged on the left and the right of the table 5 in front of the table driving device 6. Furthermore, the cutting units 3, 4 are arranged at the same position in the front-back direction. As shown in Fig. 3, the cutting unit 3 has a support portion 15 standing on the left of the table 5, an upper expanding portion 16 expanding to the right from a top part of the support portion 15, and a lower expanding portion 17 expanding to the right from a bottom part of the support portion 15. The upper expanding portion 16 spans the opening 5a of the table 5 above it and the lower expanding portion 17 spans the opening 5a of the table 5 below it.

A pulley 18 rotatable around an axis extending along the front-back direction is housed in the upper expanding portion 16 and a pulley 19 rotatable around an axis extending along the front-back direction is housed in the lower expanding portion 17. A looped band saw 20 comprised of a band wire is stretched between the outer periphery of the pulley 18 and the outer periphery of the pulley 19. A saw blade 20a is formed at the rear edge of the band wire of the band saw 20 (cf. Fig. 6). The saw blade 20a is not limited to a blade of the saw blade shape but may be a whetstone-like blade formed by electrodepositing diamond abrasive grains on the rear edge of the band wire. The band saw 20 is subject to a tension so as to push the pulley 18 and the pulley 19 away from each other. For this reason, a pair of band wire portions 20b, 20c located between the pulley 18 and the pulley 19, of the band saw 20 extend in a linear shape along the vertical direction. The right band wire portion 20b is exposed between the upper expanding portion 16 and the lower expanding portion 17 and is guided through the opening 5a of the table 5.

A power source 21 such as a motor is housed in the cutting unit 3. The power source 21 rotates the pulley 18 or the pulley 19 counterclockwise when viewed from the front. As the drive source 21 rotates the pulley 18 or the pulley 19, the band wire of the band saw 20 is driven counterclockwise and the band wire portion 20b is continuously driven downward. In this manner, the pulleys 18, 19 and the power source 21 constitute a driving device E1 for driving the band saw 20. Namely, the cutting unit 3 has the band saw 20 having the linear band wire portions 20b, 20c, and the driving device E1 for the band saw 20.

The cutting unit 4 has a support portion 22 standing on the right of the table 5, an upper expanding portion 23 expanding to the left from a top part of the support portion 22, and a lower expanding portion 24 expanding to the left from a bottom part of the support portion 22. The upper expanding portion 23 spans the opening 5b of the table 5 above it and the lower expanding portion 24 spans the opening 5b of the table 5 below it.

A pulley 25 rotatable around an axis extending along the front-back direction is housed in the upper expanding portion 23 and a pulley 26 rotatable around an axis extending along the front-back direction is housed in the lower expanding portion 24. A looped band saw 27 comprised of a band wire is stretched between the pulley 25 and the pulley 26. A saw blade 27a is formed at the rear edge of the band wire of the band saw 27 (cf. Fig. 6). The saw blade 27a is not limited to a blade of the saw blade shape, either, but may be a whetstone-like blade formed by electrodepositing diamond abrasive grains on the rear edge of the band wire. The band saw 27 is subject to a tension so as to push the pulley 25 and the pulley 26 away from each other. For this reason, a pair of band wire portions 27b, 27c located between the pulley 25 and the pulley 26 extend in a linear shape along the vertical direction. The left band wire portion 27b is exposed between the upper expanding portion 23 and the lower expanding portion 24 and is guided through the opening 5b of the table 5.

A power source 28 such as a motor is housed in the cutting unit 4. The power source 28 rotates the pulley 25 or the pulley 26 clockwise when viewed from the front. As the drive source 28 rotates the pulley 25 or the pulley 26, the band wire of the band saw 27 is driven clockwise and the band wire portion 27b is continuously driven downward. In this manner, the pulleys 25, 26 and the power source 28 constitute a driving device E2 for driving the band saw 27. Namely, the cutting unit 4 has the band saw 27 having the linear band wire portions 27b, 27c, and the driving device E2 for the band saw 27.

The cutting unit 4 is set on a space adjusting mechanism 29. The space adjusting mechanism 29 makes the position of the cutting unit 4 changeable in the left-right direction and thereby makes the space between the cutting unit 3 and the cutting unit 4 changeable in the left-right direction. When the position of the cutting unit 4 is changed in the left-right direction, the position of the band wire portion 27b also changes. For meeting it, the width of the opening 5b of the table 5 is set larger than the width of the opening 5a.

When the cutting units 3, 4 are viewed from the front, the band wire portion 20b of the cutting unit 3 and the band wire portion 27b of the cutting unit 4 extend in the linear shape along the vertical direction so as to intersect with the honeycomb molded body P set on the moving stage 12. Namely, the band wire portions 20b, 27b correspond to the blade portions B1, B2 extending so as to intersect with the axis L1, when viewed from the moving direction of the honeycomb molded body P. Furthermore, the band saws 20, 27 correspond to the cutting members having the blade portions B1, B2. The driving devices E1, E2 for the band saws 20, 27 are arranged outside the blade portions B1, B2. For this reason, it is easier to locate the blade portion B1 and the blade portion B2 closer to each other, and a setting available range is wider for the space between the blade portion B1 and the blade portion B2. Since the cutting units 3, 4 are arranged at the same position in the front-back direction as shown in Fig. 4, the blade portions B1, B2 are also located at the same position in the front-back direction.

The below will describe a cutting method for a honeycomb molded body P using the cutting device 1. First, the honeycomb molded body P is set on the groove 12a of each moving stage 12 with the axis L1 thereof extending along the left-right direction, and the honeycomb molded body P is fixed to the moving stage 12 by the retainers A1. Furthermore, the driving devices E1, E2 are activated to drive the band saws 20, 27, to continuously drive the blade portions B1, B2 downward.

Next, the ball screw 8 is rotated by the power source 9 to move the table 5 forward. Then, the two moving stages 12, 12 simultaneously move and each honeycomb molded body P moves forward together with each moving stage 12. Namely, each honeycomb molded body P moves in a moving direction F perpendicular to the axis L1. Since the openings 5a, 5b of the table 5 are formed along the front-back direction, the blade portions B1, B2 do not touch the inner faces of the openings 5a, 5b, even with the movement of the table 5. Furthermore, since the gap is formed between the moving stage 12 and the auxiliary moving stage 30, 31, the blade portions B1, B2 do not touch the moving stage 12 or the auxiliary moving stage 30, 31, even with the movement of the table 5.

With the movement of the table 5, the honeycomb molded body P moves toward the blade portions B1, B2 and the saw blades 20a, 27a of the blade portions B1, B2 come into contact with the outer peripheral surface of the honeycomb molded body P. Since the blade portions B1, B2 are arranged at the same position in the front-back direction, the saw blades 20a, 27a of the blade portions B1, B2 simultaneously come into contact with the outer peripheral surface of the honeycomb molded body P.

With further movement of the table 5, the honeycomb molded body P is cut at a face M1 by the blade portion B1, while the honeycomb molded body P is cut at a face M2 by the blade portion B2. In this manner, the honeycomb molded body P is cut at the face M1 by the band saw 20 and the honeycomb molded body P is cut at the face M2 by the band saw 27, in the process in which the honeycomb molded body P moves in the moving direction F. This achieves efficient cutting of the honeycomb molded body P. Particularly, the honeycomb molded body P moves only in the moving direction F before completion of the cutting of the honeycomb molded body P at the faces M1, M2. Namely, since the honeycomb molded body P is cut at both of the faces M1, M2 by moving the honeycomb molded body P only in one direction, the honeycomb molded body P can be more efficiently cut.

Furthermore, since the honeycomb molded body P moves relative to the blade portions B1, B2, a relative movement locus of the blade portion B1 and a relative movement locus of the blade portion B2 to the honeycomb molded body P approximately agree with each other. Since this makes the distance between the face M1 and the face M2 after cut or the like stable, the honeycomb molded body P can be accurately cut. Particularly, the honeycomb molded body P moves only in the moving direction F before completion of the cutting of the honeycomb molded body P at the faces M1, M2 and does not move in the opposite direction to the moving direction F; therefore, the blade portions B1, B2 do not pass already-cut portions again. For this reason, it is feasible to prevent the faces M1, M2 after cut from being excessively cut, to improve smoothness and flatness of the cut faces, and to achieve more accurate cutting of the honeycomb molded body P.

Furthermore, since the saw blades 20a, 27a of the blade portions B1, B2 simultaneously come into contact with the outer peripheral surface of the honeycomb molded body P as described above, the cutting by the blade portion B1 and the cutting by the blade portion B2 proceed at the same time. For this reason, the honeycomb molded body P can be more efficiently cut.

A space between the face M1 and the face M2 of the cut honeycomb molded body P is determined by a space between the blade portion B1 and the blade portion B2. For this reason, even with deviation of the set position of the honeycomb molded body P in the left-right direction, it is feasible to maintain the space between the face M1 and the face M2 after cut and maintain the accuracy of cutting of the honeycomb molded body P. In addition, since the moving direction F is the direction perpendicular to the axis L1 and the blade portion B1 and the blade portion B2 extend in the direction perpendicular to the axis L1 and the moving direction F, it is feasible to enhance the perpendicularity of the faces M1, M2 to the axis L1.

Since the blade portions B1, B2 are continuously driven downward, a downward force to cut the honeycomb molded body P also acts thereon and thus the honeycomb molded body P can be more efficiently cut. Particularly, the blade portions B1, B2 are parallel to each other and both are driven in the same direction. Because of this, a cutting load on the honeycomb molded body P from the blade portion B1 and a cutting load on the honeycomb molded body P from the blade portion B2 act at the different positions and in the same direction when viewed from the moving direction F. For this reason, the honeycomb molded body P is less likely to incline when viewed from the moving direction F, whereby the honeycomb molded body P can be more accurately cut.

Furthermore, the honeycomb molded body P is supported from bottom by the moving stage 12. Namely, the honeycomb molded body P is supported so as to oppose to the direction in which the blade portions B1, B2 are driven. Because of this, the honeycomb molded body P is pressed toward the moving stage 12 side by the cutting loads on the honeycomb molded body P from the blade portions B1, B2, whereby the position and posture of the honeycomb molded body P become stable when viewed from the moving direction F. For this reason, the honeycomb molded body P can be more accurately cut.

Furthermore, the portion between the face M1 and the face M2, of the honeycomb molded body P is fixed to the moving stage 12 by the retainers A1. Because of this, the position and posture of the portion between the face M1 and the face M2, of the honeycomb molded body P, become stable, whereby the honeycomb molded body P can be more accurately cut.

Furthermore, in this cutting method, the honeycomb molded body P is moved without moving the cutting units 3, 4. In the case of the honeycomb molded body P being moved, the size and weight of the cutting units 3, 4 do not affect the positioning accuracy of the honeycomb molded body P. For this reason, the relative positioning accuracy between the honeycomb molded body P and the blade portions B1, B2 improves when compared with a case where the cutting units 3, 4 are moved. The improvement of the positioning accuracy becomes more prominent, particularly, in the case of the cutting device 1 with a plurality of cutting units 3, 4 because of the large size and weight of the whole of the cutting units 3, 4. Therefore, the honeycomb molded body P can be more accurately cut.

In the cutting device 1, the space between the cutting unit 3 and the cutting unit 4 can be changed by the space adjusting mechanism 29. Because of this, depending upon the length of the honeycomb structure 100 to be produced, the space between the blade portion B1 and the blade portion B2 can be changed and thus the space between the face M1 and the face M2 can be changed.

The portions outside the faces M1, M2, of the cut honeycomb molded body P are separated from the portion fixed by the retainers A1 but do not fall off because they are supported by the auxiliary moving stages 30, 31. For this reason, these portions can be effectively utilized for production of the honeycomb structure 100.

With further movement of the table 5, the honeycomb molded body P set on the subsequent moving stage 12 is cut. After completion of the cutting of all the honeycomb molded bodies P, the table 5 is halted and the cut honeycomb molded bodies P are collected. After completion of the collection of all the honeycomb molded bodies P, the ball screw 8 is rotated backward to retract the table 5 to the original position. Thereafter, the cutting of honeycomb molded bodies P is repeated by the same procedure. In this manner, the step of arranging the honeycomb molded body P and the step of cutting the honeycomb molded body P can be performed at once for two honeycomb molded bodies P, whereby the honeycomb molded body can be more efficiently cut.

The portion between the face M1 and the face M2, of the cut honeycomb molded body P is used as a base material of the honeycomb structure 100. At least one of the portion outside the face M1 and the portion outside the face M2, of the cut honeycomb molded body P is used as a pedestal on an occasion of performing a predetermined treatment for the base material. Specifically, it is used as a pedestal on an occasion of firing the base material. Because of this, the excess part of the honeycomb molded body P can be effectively utilized for production of the honeycomb structure 100.

The cutting device 1 described above can be modified in various ways. For example, the number of moving stages 12 is not limited to two, but may be one or three or more. The direction in which the plurality of moving stages 12 line up is not limited to the front-back direction, but may be any direction intersecting with the axis L1 of the honeycomb molded body P, e.g., the vertical direction or the like.

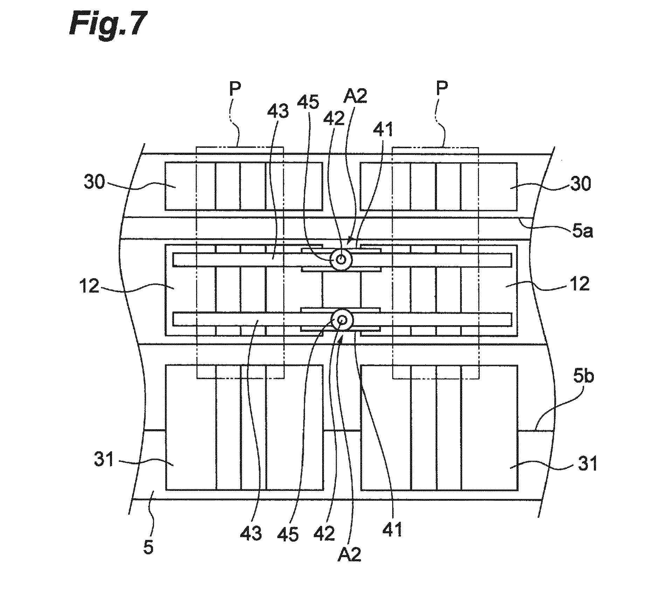

Furthermore, the retainers applicable to the cutting device 1 are not limited to the above-described retainers A1, but include other retainers in various forms. For example, a retainer A2 shown in Figs. 7 to 10 has a coupling plate 41 stretched between the moving stages 12 on the moving stages 12, a columnar body 42 projecting upward from a central part of the coupling plate 41, and a rod-like arm member 43 attached to an upper end 42a of the columnar body 42. Figs. 7 to 10 show an example in which two retainers A2 lining up along the left-right direction are provided.

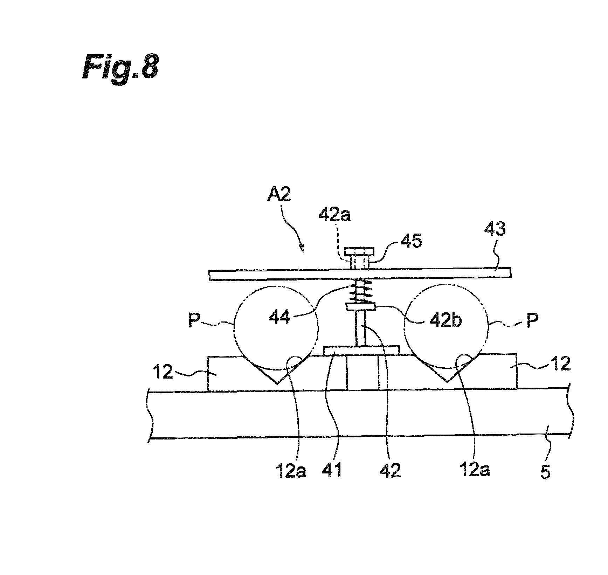

As shown in Figs. 7 and 8, the arm member 43 extends on both sides in the arrangement direction of the moving stages 12, 12, i.e., forward and backward and the upper end 42a of the columnar body 42 is inserted into a middle part of the arm member 43 in the front-back direction. A flange portion 42b is provided at a middle portion of the columnar body 42. A coil spring 44 spirally surrounding the columnar body 42 is arranged between the flange portion 42b and the arm member 43 and the arm member 43 is supported through the coil spring 44 on the flange portion 42b. A male screw is formed on a peripheral surface of the upper end 42a of the columnar body 42. A knurled nut 45 is attached to the upper end 42a with the male screw formed thereon and the knurled nut 45 is in contact with the arm member 43.

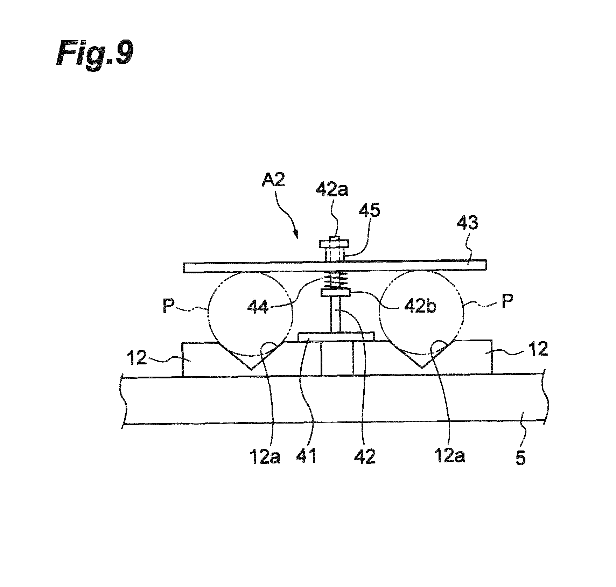

As the knurled nut 45 is fastened, the arm member 43 moves downward while compressing the coil spring 44, and it comes into contact with each honeycomb molded body P as shown in Fig. 9. As the knurled nut 45 is further fastened, the arm member 43 pushes each honeycomb molded body P toward the moving stage 12 side. By this, each honeycomb molded body P is securely fixed to the moving stage 12. As the knurled nut 45 is unfastened, the arm member 43 is lifted up by reaction force of the coil spring 44 and leaves from each honeycomb molded body P (cf. Fig. 8).

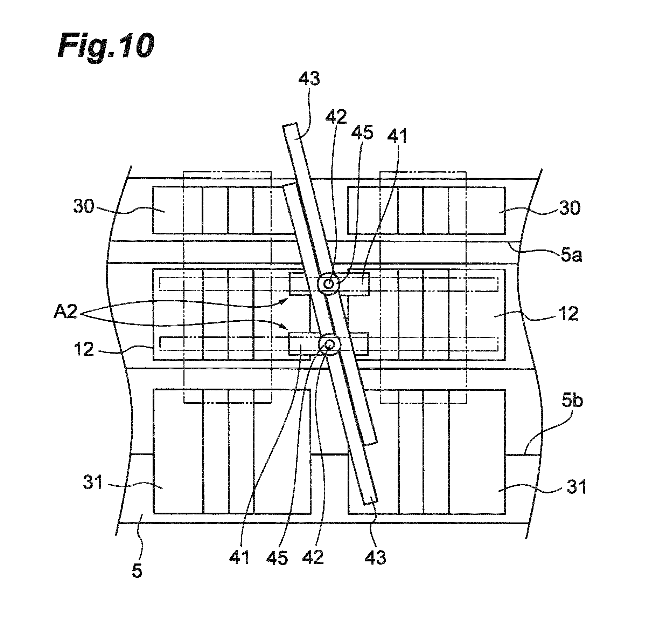

With such a retainer A2, two honeycomb molded bodies P can be fixed by one arm member 43 attached to one columnar body 42, and thus it is feasible to raise efficiency of an operation of fixing the honeycomb molded body P to each moving stage 12. In addition, since the arm member 43 is in contact with the honeycomb molded bodies P on both sides of the columnar body 42, the posture of the arm member 43 is kept stable even by one columnar body 42, whereby each honeycomb molded body P can be firmly fixed to the moving stage 12. Furthermore, as shown in Fig. 10, the arm member 43 can be rotated around the axis of the columnar body 42, whereby the arm member 43 can be retracted from above each moving stage 12. For this reason, the setting and removal of honeycomb molded body P can be performed without need for detaching the arm member 43 from the columnar body 42, and thus it is feasible to further raise the efficiency of the operation of fixing the honeycomb molded body P to each moving stage 12.

### [Second Embodiment]

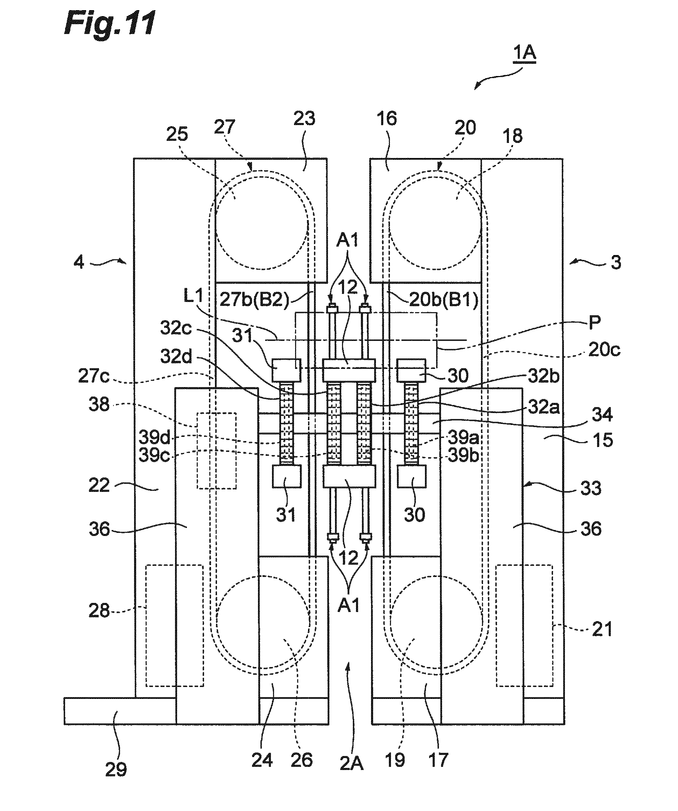

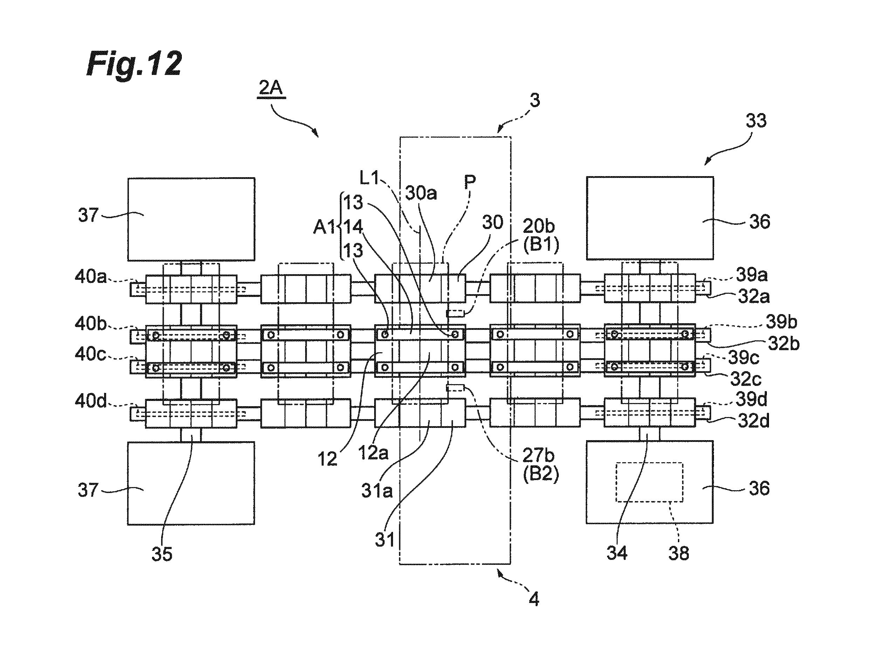

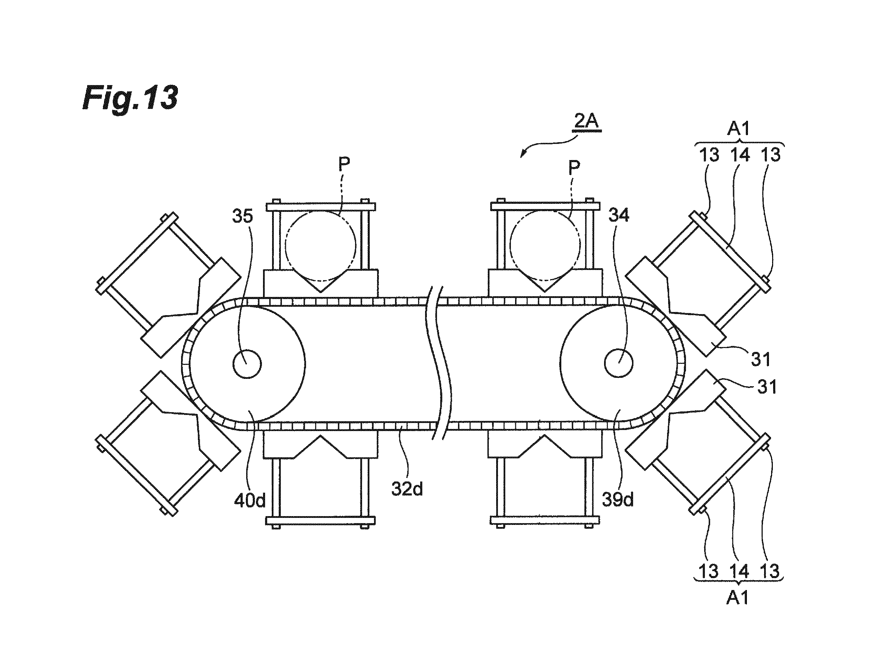

Fig. 11 is a front view of the second embodiment of the cutting device according to the present invention. Fig. 12 is a plan view of the conveyer in Fig. 11, and Fig. 13 a side view of the conveyer in Fig. 11. The cutting device 1A shown in Figs. 11 to 9 is configured to move the moving stages 12 by looped chains, instead of the table 5 in the cutting device 1.

The cutting device 1A is provided with a conveyer 2A instead of the conveyer 2. The conveyer 2A has four looped chains 32a, 32b, 32c, 32d and a chain driving device 33, instead of the table 5 and the table driving device 6. The chain driving device 33 has a pair of shafts 34, 35 arranged in the front-back direction and extending along the left-right direction, and support portions 36, 37 rotatably supporting the shafts 34, 35, respectively. A power source 38 such as a motor for rotating the shaft 34 is housed in the support portion 36. The power source 38 may be housed in the support portion 37.

The shaft 34 is provided with four sprockets 39a, 39b, 39c, 39d lining up from left to right. Each of the sprockets 39a, 39b, 39c, 39d is a disk-like member perpendicular to the shaft 34 and rotates together with the shaft 34. The shaft 35 is provided with four sprockets 40a, 40b, 40c, 40d lining up from left to right. A chain 32a is hung on the sprocket 39a and the sprocket 40a. A chain 32b is hung on the sprocket 39b and the sprocket 40b. A chain 32c is hung on the sprocket 39c and the sprocket 40c. A chain 32d is hung on the sprocket 39d and the sprocket 40d.

A tension is applied to the chains 32a, 32b, 32c, 32d by keeping the shaft 34 and the shaft 35 away from each other. Because of this, chain line portions located between the sprockets 39a, 39b, 39c, 39d and the sprockets 40a, 40b, 40c, 40d, of the chains 32a, 32b, 32c, 32d linearly extend along the front-back direction. In this manner, the chains 32a, 32b, 32c, 32d line up from left to right.

As the drive source 38 rotates the shaft 34, the sprockets 39a, 39b, 39c, 39d rotate together with the shaft 34. The chains 32a, 32b, 32c, 32d circulate in conjunction with the sprockets 39a, 39b, 39c, 39d and the sprockets 40a, 40b, 40c, 40d. The upper chain line portions of the chains 32a, 32b, 32c, 32d move forward while the lower chain line portions thereof move backward.

A plurality of moving stages 12, 12 are provided on the outer peripheries of the chains 32b, 32c and the retainers A1 are provided on each moving stage 12. The plurality of moving stages 12, 12 are arranged at equal intervals along the chain lines of the chains 32b, 32c. Each moving stage 12 is stretched between the chain 32b and the chain 32c and circulates together with the chains 32b, 32c. Each moving stage 12 is arranged so that when it is located over the chains 32b, 32c, the groove 12a extends along the left-right direction and faces up.

A plurality of auxiliary moving stages 30 are provided corresponding to the moving stages 12 on the outer periphery of the chain 32a. A plurality of auxiliary moving stages 31 are provided corresponding to the moving stages 12 on the outer periphery of the chain 32d. Each auxiliary moving stage 30, 31 is arranged so that when it is located over the chain 32a, 32d, the groove 30a, 31a extends along the left-right direction and faces up.

The cutting units 3, 4 are arranged on the left and the right of the chains 32a, 32b, 32c, 32d between the shaft 34 and the shaft 35. The blade portion B1 of the cutting unit 3 is guided through between the chain 32a and the chain 32b. The blade portion B2 of the cutting unit 4 is guided through between the chain 32c and the chain 32d.

In the cutting device 1A, the moving stages 12 and the auxiliary moving stages 30, 31 located over the chains 32a, 32b, 32c, 32d move forward together with the chain line portions of the chains 32a, 32b, 32c, 32d. The honeycomb molded body P is set on the forwardly-moving moving stage 12 and auxiliary moving stages 30, 31, whereby the honeycomb molded body P can be cut in the same manner as in use of the cutting device 1. Each moving stage 12 and auxiliary stages 30, 31 return to the back position through below the chains 32a, 32b, 32c, 32d while the subsequent moving stages 12 and auxiliary moving stages 30, 31 move forward. The moving stage 12 and auxiliary moving stages 30, 31 having returned to the back position again move over the chains 32a, 32b, 32c, 32d and move forward. By this, the the moving stages 12 and the auxiliary moving stages 30, 31 can be continuously moved toward the blade portions B1, B2, whereby the honeycomb molded body P can be more efficiently cut.

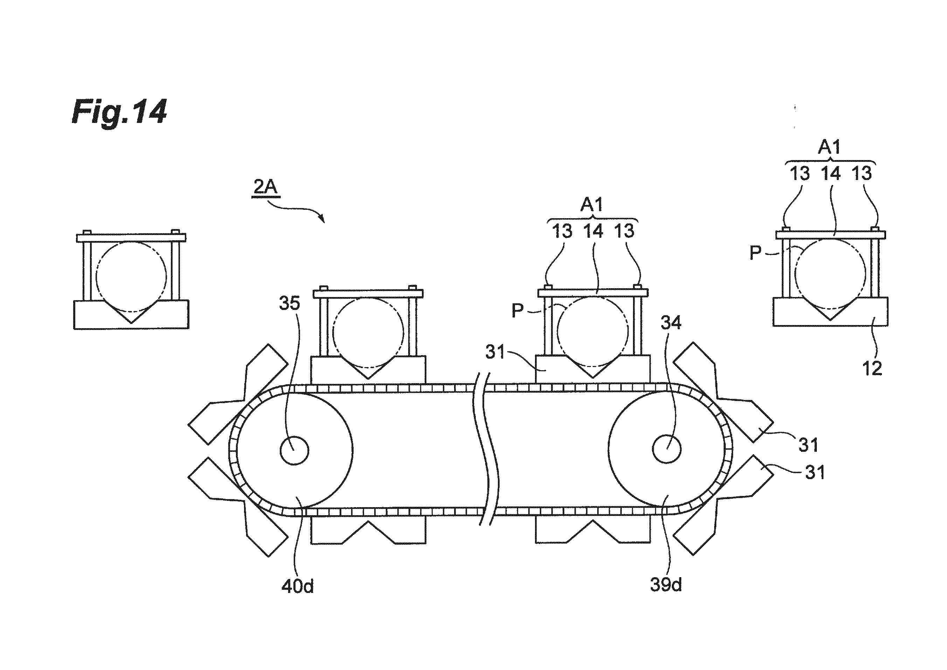

The moving stages 12 may be configured as detachable, as shown in Fig. 14. In this case, the honeycomb molded body P can be set in a state in which the moving stage 12 is detached from the conveyer 2A.

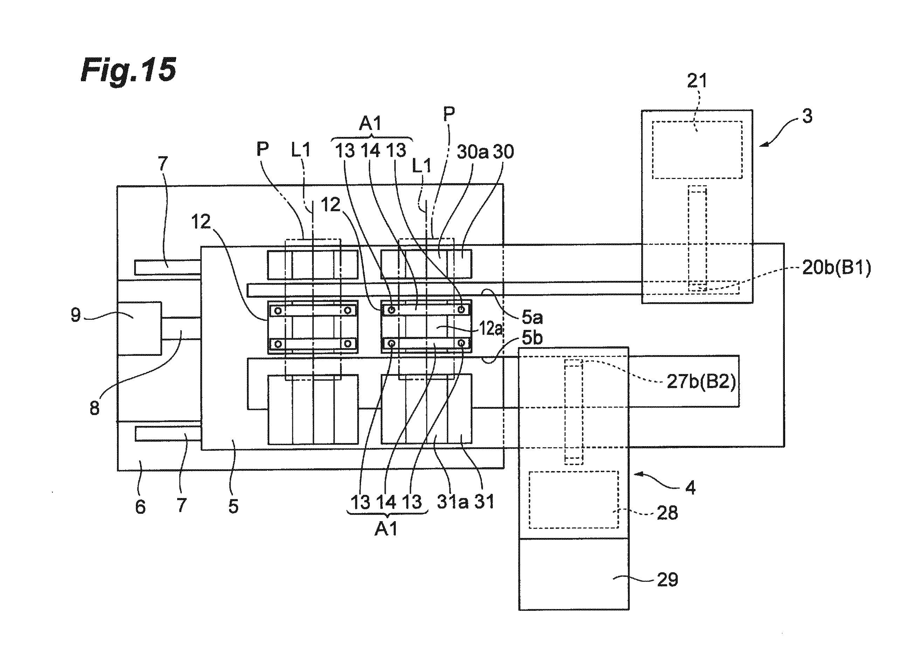

The above described the preferred embodiments of the present invention but it should be noted that the present invention is not always limited to the above-described embodiments and can be modified in many ways without departing from the spirit and scope of the invention. For example, as shown in Fig. 15, the cutting unit 3 and the cutting unit 4 may be arranged at different positions in the front-back direction. In this case, it becomes feasible to bring one of the blade portion B1 and the blade portion B2 into contact with the honeycomb molded body P and thereafter bring the other of the blade portion B1 and the blade portion B2 into contact with the honeycomb molded body P. This can prevent a sudden increase of the load on the honeycomb molded body P. Furthermore, the cutting unit 3 and the cutting unit 4 become less likely to interfere, in the left-right direction. For this reason, it becomes easier to locate the blade portion B1 and the blade portion B2 closer to each other and the setting available range becomes wider for the space between the face M1 and the face M2.

Furthermore, the cutting units 3, 4 may be increased to three or more units and they may be arranged to cut three or more portions in the process of moving the honeycomb molded body P in one direction. Furthermore, it is also possible to suitably incline the blade portions B1, B2 and thereby incline the faces M1, M2, thus producing the honeycomb structure 100 with the end faces 100a, 100b inclined. Furthermore, the cutting members are not limited to the band saws, but may be, for example, thin wires.

### Industrial Applicability

The present invention is applicable to production of the honeycomb structure for cleaning up the gas emitted from the internal combustion engine.

### Reference Signs List

1, 1A cutting device; 2, 2A conveyer; 3, 4 cutting units; 12 moving stages; 20, 27 band saws; 29 space adjusting mechanism; 30, 31 auxiliary moving stages; 100 honeycomb structure; 110 cells; A1 retainers; B1, B2 blade portions; F moving direction; P honeycomb molded body; L1 axis; M1, M2 faces.

## Claims

1. A cutting method for a honeycomb molded body, for cutting the honeycomb molded body having a plurality of cells extending along a predetermined axis, at a first face and a second face intersecting with the axis, the cutting method comprising: while moving the honeycomb molded body in a moving direction intersecting with the axis, cutting the honeycomb molded body at the first face by a first cutting member having a linear first blade portion extending so as to intersect with the axis when viewed from the moving direction, and cutting the honeycomb molded body at the second face by a second cutting member having a linear second blade portion extending so as to intersect with the axis when viewed from the moving direction.

2. The cutting method for a honeycomb molded body according to claim 1, wherein the moving direction is a direction substantially perpendicular to the axis and wherein the first blade portion and the second blade portion extend in a direction substantially perpendicular to the axis and the moving direction.

3. The cutting method for a honeycomb molded body according to claim 1 or 2, wherein the first cutting member and the second cutting member are band saws.

4. The cutting method for a honeycomb molded body according to claim 3, wherein the first blade portion and the second blade portion are substantially parallel to each other, and
wherein the first blade portion and the second blade portion are driven in the same direction in their respective extending directions.

5. The cutting method for a honeycomb molded body according to claim 4, wherein the honeycomb molded body is supported so as to oppose to the direction in which the first blade portion and the second blade portion are driven.

6. The cutting method for a honeycomb molded body according to any one of claims 1 to 5, wherein the first blade portion and the second blade portion are substantially simultaneously brought into contact with the honeycomb molded body moving in the moving direction.

7. The cutting method for a honeycomb molded body according to any one of claims 1 to 5, wherein the first blade portion is brought into contact with the honeycomb molded body moving in the moving direction and thereafter the second blade portion is brought into contact with the honeycomb molded body.

8. The cutting method for a honeycomb molded body according to any one of claims 1 to 7, wherein after the first blade portion comes into contact with the honeycomb molded body and before cutting of the honeycomb molded body at the first face and the second face is completed, the honeycomb molded body is moved only in the moving direction.

9. The cutting method for a honeycomb molded body according to any one of claims 1 to 8, wherein a plurality of aforementioned honeycomb molded bodies are arranged so as to line up along an arrangement direction intersecting with the axis and wherein the plurality of aforementioned honeycomb molded bodies are simultaneously moved in the moving direction.

10. A production method for a honeycomb structure, comprising: producing the honeycomb structure, using a portion between the first face and the second face of the honeycomb molded body cut with the use of the cutting method for a honeycomb molded body according to any one of claims 1 to 9, as a base material.

11. The production method for a honeycomb structure according to claim 10, wherein the honeycomb structure is produced by subjecting the base material to a predetermined treatment, using, at least one of a portion outside the first face and a portion outside the second face of the cut honeycomb molded body, as a pedestal.

12. A cutting device for a honeycomb molded body, for cutting the honeycomb molded body having a plurality of cells extending along a predetermined axis, at a first face and a second face intersecting with the axis, the cutting device comprising:
a conveyer for moving the honeycomb molded body in a moving direction intersecting with the axis;
a first cutting unit for cutting the honeycomb molded body at the first face by a first cutting member having a linear first blade portion extending so as to intersect with the axis when viewed from the moving direction; and
a second cutting unit for cutting the honeycomb molded body at the second face by a second cutting member having a linear second blade portion extending so as to intersect with the axis when viewed from the moving direction.

13. The cutting device for a honeycomb molded body according to claim 12, wherein the moving direction is a direction substantially perpendicular to the axis and wherein the first blade portion and the second blade portion extend in a direction substantially perpendicular to the axis and the moving direction.

14. The cutting device for a honeycomb molded body according to claim 12 or 13, wherein the first cutting member and the second cutting member are band saws.

15. The cutting device for a honeycomb molded body according to claim 14, wherein the first blade portion and the second blade portion are substantially parallel to each other, and
wherein the first cutting unit and the second cutting unit drive the first blade portion and the second blade portion in the same direction in their respective extending directions.

16. The cutting device for a honeycomb molded body according to claim 15, wherein the conveyer supports the honeycomb molded body so as to oppose to the direction in which the first blade portion and the second blade portion are driven.

17. The cutting device for a honeycomb molded body according to any one of claims 12 to 16, further comprising: a space adjusting mechanism for adjusting a space between the first cutting unit and the second cutting unit in a direction perpendicular to the moving direction.

18. The cutting device for a honeycomb molded body according to any one of claims 12 to 17, wherein the first cutting unit and the second cutting unit are arranged at substantially identical positions in the moving direction.

19. The cutting device for a honeycomb molded body according to any one of claims 12 to 17, wherein the first cutting unit and the second cutting unit are arranged at different positions in the moving direction.

20. The cutting device for a honeycomb molded body according to any one of claims 12 to 19, wherein the conveyer has: a moving stage which moves in the moving direction while supporting the honeycomb molded body; and a retainer for fixing the honeycomb molded body to the moving stage between the first face and the second face.

21. The cutting device for a honeycomb molded body according to claim 20, wherein the conveyer has a plurality of aforementioned moving stages arranged so as to line up along an arrangement direction intersecting with the axis, and supports the honeycomb molded body on each of the moving stages.

22. The cutting device for a honeycomb molded body according to claim 21, wherein the conveyer has two aforementioned moving stages, and
wherein the retainer has: a columnar body projecting in a direction substantially perpendicular to the axis and the arrangement direction between the two aforementioned moving stages; and an arm member attached to the columnar body, extending on both sides in the arrangement direction from the columnar body, and being in contact with two aforementioned honeycomb molded bodies supported respectively by the two aforementioned moving stages.

23. The cutting device for a honeycomb molded body according to any one of claims 20 to 22, wherein the conveyer further has an auxiliary moving stage which moves together with the moving stage while supporting the honeycomb molded body outside the first face and outside the second face.
